# EUROPÄISCHE PATENTSCHRIFT

(11) **EP 2 530 113 B1**
(45) Veröffentlichungstag und Bekanntmachung des Hinweises auf die Patenterteilung: **15.03.2017**
(21) Anmeldenummer: 11167921.3
(22) Anmeldetag: 27.05.2011
(51) Int. Cl.: C08J 9/00, C08J 9/232, C08J 9/35, B27G 11/00

(54) **VERBUNDSCHAUMSTOFF, WÄRMEDÄMMELEMENT AUS VERBUNDSCHAUMSTOFF SOWIE VERFAHREN ZUR HERSTELLUNG EINES VERBUNDSCHAUMSTOFFS**
COMPOUND FOAM MATERIAL, HEAT INSULATION ELEMENT MADE OF COMPOUND FOAM MATERIAL AND METHOD FOR PRODUCING A COMPOUND FOAM MATERIAL
MOUSSE COMPOSITE, ÉLÉMENT D'ISOLATION THERMIQUE EN MOUSSE COMPOSITE ET PROCÉDÉ DE FABRICATION D'UNE MOUSSE COMPOSITE

(43) Veröffentlichungstag der Anmeldung: 05.12.2012
(73) Patentinhaber: STO SE & Co. KGaA, 79780 Stühlingen (DE)
(72) Erfinder: Weier, Andreas, 78647 Trossingen (DE); Hitzler, Martin, 78244 Gottmadingen (DE)
(74) Vertreter: Gottschalk, Matthias

(56) Entgegenhaltungen:
- WO-A1-00/69988
- BE-A1- 883 147
- FR-A1- 2 182 888
- US-A- 3 585 157
- US-A- 4 240 998
- US-A- 4 307 200

## Beschreibung

Die Erfindung betrifft einen Verbundschaumstoff zur Herstellung von Wärmedämmelementen, insbesondere Wärmedämmplatten zur Wärmedämmung von Gebäuden, mit den Merkmalen des Oberbegriffs des Anspruchs 1. Der Verbundschaumstoff umfasst einen Schaumstoff aus einem thermoplastischen Kunststoff, insbesondere expandiertes Polystyrol (EPS), expandiertes Polyethylen (EPE) oder expandiertes Polypropylen (EPP). Ferner betrifft die Erfindung ein Wärmedämmelement aus einem solchen Verbundschaumstoff sowie ein Verfahren zur Herstellung eines Verbundschaumstoffs.

### Stand der Technik

Aus dem Stand der Technik sind verschiedene Schaumstoffe zur Herstellung von Wärmedämmelementen, insbesondere Wärmedämmplatten zur Wärmedämmung von Gebäuden, bekannt. Im Baubereich finden beispielsweise Hartschaumplatten aus expandiertem oder extrudiertem Polystyrol häufig Verwendung. Ferner sind Verbundschaumstoffe umfassend wenigstens einen Schaumstoff als Wärmedämmstoff bekannt.

Ein solcher Verbundschaumstoff geht beispielhaft aus der DE 17 04 647 A1 hervor. Zur Herstellung des Verbundschaumstoffes werden verschäumbare duroplastische Kunststoffe mit thermoplastischen Schaumstoffen verschäumt, die in Form von Strängen, Bändern und/oder Folien vorliegen. Durch Zugabe des thermoplastischen Schaumstoffs in Streifen-, Band- oder Folienform sollen die mechanischen Eigenschaften des Verbundschaumstoffs gegenüber einem solchen mit thermoplastischem Schaumstoff in Kugelform verbessert werden, wie er beispielsweise den belgischen Patentschriften BE 635 484 und 639 111 zu entnehmen ist. Als duroplastische Kunststoffe sollen bevorzugt Polyurethane oder Polyepoxide und als thermoplastische Kunststoffe Polyvinylchlorid, Polystyrol oder Polyethylen Einsatz finden, wobei die thermoplastischen Kunststoffe bereits geschäumt sind, wenn sie mit einem verschäumbaren duroplastischen Kunststoff vermischt werden. Der Verbundschaumstoff aus Thermoplasten und Duroplasten soll eine hohe Biegefestigkeit aufweisen und insbesondere als Isolier-, Verpackungs- und Füllmaterial einsetzbar sein.

Aus den Druckschriften US 4,307,200 A und US 4,240,998 A sind ferner Verbundschaumstoffe sowie Verfahren zu deren Herstellung bekannt, bei denen schäumbare oder vorgeschäumte Polystyrol-Perlen, ein offenzelliges Material, wie beispielsweise Neopren, und ein Bindemittel gemischt und verpresst werden. Das Bindemittel soll nach dem Erhärten oder Setzen den Verbund der Ausgangsstoffe sicherstellen. Zugleich soll eine gewisse Flexibilität des Endprodukts erhalten bleiben, um dieses als Polstermaterial einsetzen zu können.

Ein weiterer Verbundschaumstoff geht aus der US 3,585,157 A hervor. Er vereint zwei unterschiedliche Leichtfüllstoffe, deren Verbund wiederum über ein Bindemittel hergestellt ist.

Der Erfindung liegt die Aufgabe zugrunde, einen Verbundschaumstoff zur Herstellung eines Wärmedämmelementes anzugeben, das hervorragende Wärmedämmeigenschaften besitzt und zugleich kostengünstig herstellbar ist. Ferner soll der Verbundschaumstoff einen stabilen Verbund aufweisen.

Zur Lösung der Aufgabe wird ein Verbundschaumstoff mit den Merkmalen des Anspruchs 1 vorgeschlagen. Vorteilhafte Ausführungsformen der Erfindung sind in den Unteransprüchen angegeben. Ferner wird ein Wärmedämmelement aus einem solchen Verbundschaumstoff gemäß Anspruch 7 sowie ein Verfahren zur Herstellung eines Verbundschaumstoffs gemäß Anspruch 8 vorgeschlagen. Vorteilhafte Ausführungsformen des erfindungsgemäßen Verfahrens sind in den auf Anspruch 8 rückbezogenen Unteransprüchen angegeben.

### Offenbarung der Erfindung

Der vorgeschlagene Verbundschaumstoff umfasst einen Schaumstoff aus einem thermoplastischen Kunststoff, insbesondere expandiertes Polystyrol (EPS), expandiertes Polyethylen (EPE) und/oder expandiertes Polypropylen (EPP). Der Verbundschaumstoff kann demzufolge auch einen Schaumstoff aus verschiedenen thermoplastischen Kunststoffen umfassen. Erfindungsgemäß ist bzw. sind in den Schaumstoff aus thermoplastischem Kunststoff ein Granulat oder Stücke wenigstens eines Leichtfüllstoffs eingebunden. Der in den thermoplastischen Schaumstoff eingebundene Leichtfüllstoffanteil soll insbesondere die Wärmedämmeigenschaften des Verbundschaumstoffes gegenüber einem solchen aus dem gleichen Material jedoch ohne Leichtfüllstoffanteil verbessern. Wird ein kostengünstiger Leichtfüllstoff verwendet, können zudem die Herstellungskosten gesenkt werden. Die Einbindung des Leichtfüllstoffs in den geschäumten thermoplastischen Kunststoff gewährleistet einen stabilen Verbund, so dass der erfindungsgemäße Verbundschaumstoff eine ausreichende mechanische Festigkeit aufweist. Es werden die Mindestfestigkeitswerte der vom Industrieverband Hartschaum e.V. und vom Fachverband Wärmedämm-Verbundsysteme e.V. herausgegebenen Qualitäts-Richtlinien für Fassaden-Dämmplatten aus EPS-Hartschaum bei Wärmedämmverbundsystemen (WDVS), Stand April 2008, erreicht.

Ferner erfindungsgemäß umfasst der Leichtfüllstoff einen synthetischen Füllstoff, insbesondere einen duroplastischen Schaumstoff, wie beispielsweise Polyurethan, Polyisocyanurat, Phenolharzschaum oder Melaminharzschaum. Ergänzend kann der Leichtfüllstoff auch einen natürlichen Füllstoff, wie beispielsweise geblähter Obsidian, geblähte Perlite, Blähglas, Blähton, Schaumglas, Kork oder Cellulose umfassen. Das heißt, dass sowohl ein einziger Leichtfüllstofff, als auch beliebige Kombinationen verschiedener Leichtfüllstoffe im Verbundschaumstoff enthalten sein können.

Vorteilhafterweise handelt es sich bei dem Leichtfüllstoff um ein bereits geschäumtes bzw. geblähtes Material, das dem thermoplastischen Kunststoff vor dem Aufschäumen zugegeben worden ist. Denn ein bereits geschäumter bzw. geblähter Leichtfüllstoff verändert sein Volumen beim Aufschäumen des thermoplastischen Kunststoffs im Wesentlichen nicht, so dass eine möglichst vollständige Benetzung des Leichtfüllstoffgranulats bzw. der Leichtfüllstoffstücke mit dem Matrixmaterial und demzufolge ein stabiler Verbund gewährleistet ist. Demgegenüber würde bei einer Volumenvergrößerung des Leichtfüllstoffs der thermoplastische Kunststoff aus den Zwischenräumen verdrängt, so dass eine hinreichende Einbindung des Leichtfüllstoffs nicht mehr sichergestellt wäre.

Ergänzend zu bereits geschäumten bzw. geblähten Leichtfüllstoffen können auch natürliche Leichtfüllstoffe, wie beispielsweise Kork oder Zellulose eingesetzt werden. Denn diese verändern ihr Volumen beim Aufschäumen des thermoplastischen Kunststoffs im Wesentlichen ebenfalls nicht, so dass ein stabiler Verbund gewährleistet ist.

Vorzugsweise finden Weich- oder Hartschäume mit guten Wärmedämmeigenschaften bei zugleich niedriger Rohdichte als Leichtfüllstoffe Einsatz. Bei dem Material kann es sich sowohl um Frischmaterial, als auch um Recyclingmaterial handeln, das vor der Zugabe zum thermoplastischen Kunststoff zerkleinert worden ist. Durch Verwendung von Recyclingmaterial kann die Umwelt geschont werden.

Gemäß einer bevorzugten Ausführungsform der Erfindung besitzt der Leichtfüllstoff eine Rohdichte, die kleiner 150 kg/m³, vorzugsweise kleiner 100 kg/m³ ist. Weiterhin vorzugsweise liegt die Rohdichte des Leichtfüllstoffs im Bereich von 10 kg/m³ bis 40 kg/m³. Dadurch sind ein geringes Gewicht und eine gute Handhabbarkeit eines aus einem erfindungsgemäßen Verbundschaumstoff hergestellten Wärmedämmelements gewährleistet.

Weiterhin bevorzugt besitzt der Leichtfüllstoff eine Wärmeleitfähigkeit, die kleiner 0,10 W/mK ist. Vorzugsweise liegt die Wärmeleitfähigkeit im Bereich von 0,01 bis 0,07 W/mK, weiterhin vorzugsweise im Bereich von 0,01 bis 0,03 W/mK. Dadurch kann eine Verbesserung der Wärmedämmeigenschaften des Verbundschaumstoffs erreicht werden.

Alternativ oder ergänzend kann vorgesehen sein, dass der Leichtfüllstoff nicht brennbar oder zumindest brandhemmend ausgerüstet ist. Dadurch kann das Brandverhalten des erfindungsgemäßen Verbundschaumstoffs verbessert werden. Die brandhemmend ausgerüsteten Leichtfüllstoffe können selbst wieder als Brandschutzmittel für die thermoplastische Matrix wirken, so dass die Matrix selber ohne die üblichen Brandschutzmittel, wie beispielsweise Hexabromcyclododecan (HBCD), ausgestattet werden kann.

Des Weiteren kann der Leichtfüllstoff unregelmäßig oder regelmäßig im Verbundschaumstoff angeordnet sein. Beispielsweise kann der Verbundschaumstoff mehrschichtig ausgebildet und der Leichtfüllstoff in einer oder mehreren Schichten des Verbundschaumstoffs enthalten sein. Innerhalb der Schicht kann der Leichtfüllstoff wiederum regelmäßig oder unregelmäßig angeordnet sein. Vorzugsweise liegt der Leichtfüllstoff in einer homogenen Verteilung innerhalb des Verbundschaumstoffs oder zumindest innerhalb einer Schicht des Verbundschaumstoffs vor. Der Verbundschaumstoff weist somit möglichst gleichbleibende Produkteigenschaften auf.

Ferner wird ein Wärmedämmelement, insbesondere eine Wärmedämmplatte zur Wärmedämmung von Gebäuden, aus einem erfindungsgemäßen Verbundschaumstoff vorgeschlagen. Das Wärmedämmelement kann aus einem Block oder einem Plattenstrang eines erfindungsgemäßen Verbundschaumstoffs herausgeschnitten worden sein. Alternativ kann der Verbundschaumstoff als Formkörper und damit als fertiges Wärmedämmelement hergestellt worden sein. Letzteres erweist sich insbesondere dann als vorteilhaft, wenn der Leichtfüllstoff nicht in homogener Verteilung im Verbundschaumstoff vorliegt.

Das zur Lösung der eingangs gestellten Aufgabe ferner vorgeschlagene Verfahren zur Herstellung eines Verbundschaumstoffs zeichnet sich erfindungsgemäß dadurch aus, dass als Matrixmaterial ein schäumbarer thermoplastischer Kunststoff, insbesondere expandierbares Polystyrol (EPS), expandierbares Polyethylen (EPE) und/oder expandierbares Polypropylen (EPP), verwendet wird, welcher nach Zugabe wenigstens eines als Granulat vorliegenden oder zuvor in Stücke zerteilten Leichtfüllstoffs aufgeschäumt wird. Als Leichtfüllstoff wird vorzugsweise ein bereits geschäumter oder geblähter Füllstoff verwendet, dessen Volumen beim Aufschäumen des thermoplastischen Kunststoffs im Wesentlichen keine Veränderung erfährt.

Überraschenderweise wurde gefunden, dass nach dem Aufschäumen der vorgeschäumte thermoplastische Kunststoff die nicht mehr schäumbaren Leichtfüllstoffe im Wesentlichen vollständig umschließt, ohne dabei zusätzliche Hohlräume als die üblichen Zwickel auszubilden. Auf diese Weise wird ein stabiler Verbund bewirkt, so dass der nach dem erfindungsgemäßen Verfahren hergestellte Verbundschaumstoff eine erstaunlich hohe mechanische Festigkeit aufweist. Der Effekt kann dadurch noch gesteigert werden, dass der als Matrixmaterial dienende thermoplastische Kunststoff und der Leichtfüllstoff eine ähnliche Verteilung der Partikelgröße aufweisen. Ungünstig wirkt sich dagegen ein Fein- oder gar Staubanteil des Leichtfüllstoffs aus, da dieser die Partikel des thermoplastischen Kunststoffs belegt und die Haftung verschlechtert. Vorzugsweise wird eine ähnliche Verteilung der Partikelgröße des thermoplastischen Kunststoffs und des Leichtfüllstoffs gewählt.

Der Anteil des Leichtfüllstoffs beträgt ferner erfindungsgemäß 5 bis 80 Gew.-%, vorzugsweise 10 bis 60 Gew.-%, weiterhin vorzugsweise 20 bis 40 Gew.-%, bezogen auf das Gesamtgewicht der Ausgangsstoffe bestehend aus dem thermoplastischen Kunststoff und wenigstens einem Leichtfüllstoff. Darüber hinaus können den Ausgangsstoffen weitere Hilfsstoffe und/oder Zusätze, wie beispielsweise Flammschutzmittel, zugegeben werden.

Bei dem erfindungsgemäßen Verfahren wird der thermoplastische Kunststoff bevorzugt in einer Form oder kontinuierlich in einer Bandschäumanlage aufgeschäumt. Als Form können Blockformen oder Formteilautomaten Verwendung finden. Der als Granulat vorliegende oder zuvor in Stücke zerteilte Leichtfüllstoff wird dem thermoplastischen Kunststoff bevorzugt vor oder während des Einbringens in die Form bzw. Bandschäumanlage zugegeben. Sofern eine möglichst homogene Mischung bestehend aus thermoplastischem Kunststoff und Leichtfüllstoff erwünscht ist, werden die Ausgangsstoffe vorzugsweise vor dem Einbringen in die Form oder Bandschäumanlage gemischt. Ein mehrschichtiger Aufbau eines Verbundschaumstoffes kann in einfacher Weise durch ein Einstreuen des Leichtfüllstoffes während des Einbringens des thermoplastischen Kunststoffs in die Form oder Bandschäumanlage erreicht werden, wobei zur Ausbildung einer Schicht ohne Leichtfüllstoff, die Zugabe des Leichtfüllstoffs unterbrochen wird. Schichten können zudem durch abwechselndes Einstreuen des thermoplastischen Kunststoffs und des Leichtfüllstoffes ausgebildet werden.

Zur Herstellung eines Verbundschaumstoffes nach einem erfindungsgemäßen Verfahren können die bereits vorhandenen und zur Herstellung herkömmlicher Schaumstoffe verwendeten Anlagen eingesetzt werden. Die Durchführung des erfindungsgemäßen Verfahrens erfordert demnach keine Änderung oder Anpassung bereits vorhandener Anlagen.

Als Leichtfüllstoff wird erfindungsgemäß ein synthetischer Füllstoff, insbesondere ein duroplastischer Schaumstoff, wie beispielsweise Polyurethan, Polyisocyanurat, Phenolharzschaum oder Melaminharzschaum, verwendet. Ergänzend kann ein natürlicher Füllstoff, wie beispielsweise geblähter Obsidian, geblähte Perlite, Blähglas, Blähton, Schaumglas, Kork oder Cellulose verwendet werden. Es können ferner verschiedene Leichtfüllstoffe Verwendung finden.

Als Leichtfüllstoffe eignen sich insbesondere bereits geschäumte oder geblähte Füllstoffe, da diese beim Aufschäumen des thermoplastischen Kunststoffs ihr Volumen im Wesentlichen nicht verändern. Dadurch ist eine gute Einbindung des Leichtfüllstoffs in den thermoplastischen Kunststoff als Matrixmaterial gewährleistet. Denn beim Aufschäumen dringt der thermoplastische Kunststoff in die Zwischenräume des Leichtfüllstoffs ein und wird nicht durch eine Volumenzunahme des Leichtfüllstoffs aus den Zwischenräumen verdrängt.

Aus ökologischen Gründen wird ferner die Verwendung eines Recyclingmaterials als Leichtfüllstoff vorgeschlagen. Liegt dieses nicht als Granulat oder in kleinen Stücken vor, gilt es das Recyclingmaterial vor der Zugabe zum thermoplastischen Kunststoff zu zerkleinern. Das Zerkleinern kann in Abhängigkeit von dem jeweils gewählten Recyclingmaterial durch Brechen oder Schneiden erfolgen. Zur Sortierung des zerkleinerten Materials werden vorzugsweise Siebe bzw. Sieblinien eingesetzt.

Besonders bevorzugt wird als Leichtfüllstoff ein duroplastischer Schaumstoff verwendet, der vor der Zugabe zum thermoplastischen Kunststoff in Stücke zerteilt wird, wobei die Stücke eine maximale Kantenlänge aufweisen, die vorzugsweise 2mm bis 10mm, weiterhin vorzugsweise 4mm bis 8mm beträgt. Auf diese Weise kann ein stabiler Verbund zwischen Matrixmaterial und Leichtfüllstoff erreicht werden.

Sofern ein Leichtfüllstoff in Granulatform Verwendung finden soll, beträgt der mittlere Partikeldurchmesser 2mm bis 10mm, vorzugsweise 4mm bis 8mm. Auf diese Weise wird ebenfalls ein stabiler Verbund bei Einsatz eines Leichtfüllstoffgranulats erreicht.

Nachfolgend wird das erfindungsgemäße Verfahren anhand verschiedener Ausführungsbeispiele näher beschrieben.

### Erstes Ausführungsbeispiel:

Als Ausgangsstoffe werden vorgeschäumte expandierbare Polystyrolpartikel mit einem Partikeldurchmesser zwischen 2mm und 6mm sowie Stücke einer Hartschaumplatte aus Polyurethan (PUR) verwendet. Die vorgeschäumten expandierbaren Polystyrolpartikel dienen als Matrixmaterial, in welche es die Stücke aus PUR-Hartschaum in der Weise einzubinden gilt, dass ein stabiler Verbund erreicht wird. Die Stücke des PUR-Hartschaums weisen eine maximale Kantenlänge von etwa 4mm bis 8mm auf. Der Anteil des PUR-Hartschaums beträgt 20 Gew.-% bezogen auf das Gesamtgewicht der vorstehend genannten Ausgangsstoffe. Die PUR-Hartschaumstücke werden zunächst mit den Polystyrolpartikeln homogen vermischt. Die homogene Mischung wird dann in eine Form eingebracht und danach unter Druck und bei einer Temperatur von 100°C zu einem Block verschweißt. Als Heizmedium wird Wasserdampf eingesetzt, der die Form von oben nach unten über im Deckel und Boden der Form eingebrachte Schlitze etwa 15 Sekunden lang flächig durchströmt. Nach dem Druckabbau, der zwischen 5 und 10 Minuten dauert, kann der als Formteil vorliegende Verbundschaumstoff der Form entnommen und getrocknet werden. Der auf diese Weise hergestellte Verbundschaumstoff weist eine Wärmeleitfähigkeit λ ≤0,0309 W/mK und eine Querzugfestigkeit ≥ 100 kPa entsprechend den Vorgaben der eingangs genannten Qualitäts-Richtlinien für Fassaden-Dämmplatten aus EPS-Hartschaum bei Wärmedämm-Verbundsystemen auf. Der erhaltene Verbundschaumstoff kann demnach in die Wärmeleitfähigkeitsgruppe 032 eingestuft werden.

### Zweites Ausführungsbeispiel:

Anstelle der PUR-Hartschaumstücke wurden Stücke einer Hartschaumplatte aus Polyisocyanurat (PIR) als Leichtfüllstoff verwendet werden. Die Größe der Stücke und deren Anteil bezogen auf das Gesamtgewicht der Ausgangsstoffe wurden entsprechend dem ersten Ausführungsbeispiel gewählt. Darüber hinaus wurden die gleichen Verfahrensparameter angewendet. Der auf diese Weise erhaltene Verbundschaumstoff weist in etwa die gleichen Werte hinsichtlich Wärmeleitfähigkeit und Querzugfestigkeit wie der zuvor beschriebene Verbundschaumstoff auf.

### Drittes Ausführungsbeispiel:

Anstelle der PUR-Hartschaumstücke wurden Stücke einer Phenolharz (PF)-Hartschaumplatte als Leichtfüllstoff verwendet. Der Anteil des Leichtfüllstoffs wurde auf 40 Gew.-% bezogen auf das Gesamtgewicht der Ausgangsstoffe erhöht. Im Übrigen wurden die Verfahrensparameter entsprechend dem ersten Ausführungsbeispiel beibehalten. Der auf diese Weise erhaltene Verbundschaumstoff weist ebenfalls eine Wärmeleitfähigkeit λ ≤0,0309 W/mK und eine Querzugfestigkeit ≥ 100 kPa auf und erfüllt damit die Vorgaben der eingangs genannten Qualitäts-Richtlinien für Fassaden-Dämmplatten aus EPS-Hartschaum bei Wärmedämm-Verbundsystemen. Im Unterschied zu den beiden zuvor genannten Ausführungsbeispielen kann der auf diese Weise erhaltene Verbundschaumstoff sogar in die Wärmeleitfähigkeitsgruppe 031 eingestuft werden.

### Viertes bis sechstes Ausführungsbeispiel:

Im Unterschied zu den vorstehend genannten Ausführungsbeispielen wurden die jeweiligen Ausgangsstoffe (expandierbare Polystyrolpartikel als Matrixmaterial und PUR-Hartschaumstücke oder PIR-Hartschaumstücke oder PF-Hartschaumstücke als Leichtfüllstoff) nicht vor dem Einbringen in die Form vermischt, sondern abwechselnd in Schichten in die Form eingestreut. Der Anteil der Leichtfüllstoffe bezogen auf das Gesamtgewicht der Ausgangsstoffe wurde im Wesentlichen beibehalten und nur auf die jeweiligen Schichten gleichmäßig verteilt. Die Übrigen Verfahrensparameter wurden ebenfalls beibehalten. Auch die auf diese Weise erhaltenen mehrschichtig aufgebauten Verbundschaumstoffe erfüllten die Vorgaben der eingangs genannten Qualitäts-Richtlinien für Fassaden-Dämmplatten aus EPS-Hartschaum bei Wärmedämm-Verbundsystemen.

Der erfindungsgemäße Verbundschaumstoff wird anhand der beigefügten Figuren näher erläutert. Diese zeigen:
Fig. 1 einen Querschnitt durch einen ersten erfindungsgemäßen Verbundschaumstoff mit einem Leichtfüllstoff in unregelmäßiger Anordnung,
Fig. 2 einen Querschnitt durch einen zweiten erfindungsgemäßen Verbundschaumstoff mit einem Leichtfüllstoff in unregelmäßiger Anordnung,
Fig. 3 Bruchkanten eines dritten Verbundschaumstoffs und
Fig. 4 einen Querschnitt durch einen vierten erfindungsgemäßen Verbundschaumstoff mit einem Leichtfüllstoff in schichtweiser Anordnung.

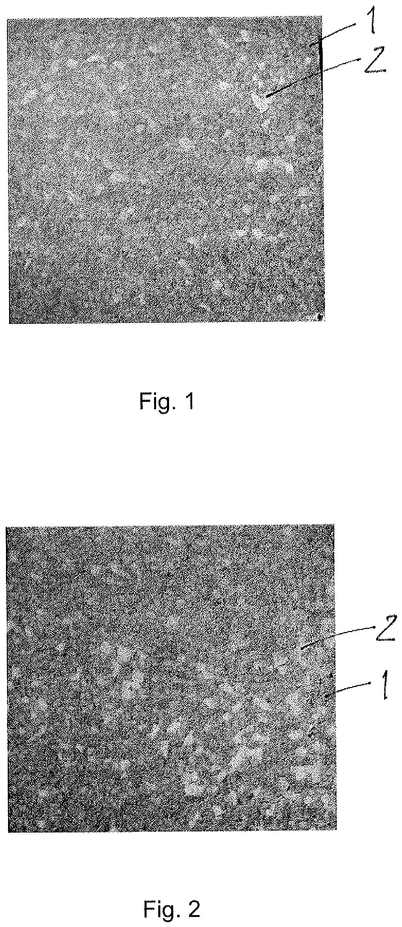

Der in der Fig. 1 dargestellte Verbundschaumstoff umfasst einen Schaumstoff 1 als Matrixmaterial sowie einen hierin eingebetteten Leichtfüllstoff 2. Bei dem Schaumstoff 1 handelt es sich um Polystyrol (EPS)-Hartschaum. Als Leichtfüllstoff 2 wurde in Stücke zerkleinerter Phenolharz (PF)-Hartschaum verwendet. Der Anteil des Leichtfüllstoffs 2 beträgt etwa 20 Gew.-% bezogen auf das Gesamtgewicht der Ausgangsstoffe zur Herstellung der Verbundplatte. Die Ansicht zeigt eine Schnittkante des Verbundschaumstoffs.

Der in der Fig. 2 dargestellte Verbundschaumstoff umfasst ebenfalls einen Polystyrol (EPS)-Hartschaum als Matrixmaterial. Als Leichtfüllstoff 2 wurde eine Mischung aus Polyurethan (PUR)-Hartschaum und Polyisocyanurat (PIR)-Hartschaum verwendet, welcher jeweils zuvor in kleine Stücke zerteilt wurde, so dass die Verteilung der Partikelgröße in etwa der der Polystyrolpartikel entspricht. Der Anteil der Leichtfüllstoffe 2 beträgt etwa 20 Gew.-% bezogen auf das Gesamtgewicht der Ausgangsstoffe zur Herstellung der Verbundplatte. Die Ansicht zeigt wiederrum eine Schnittkante des Verbundschaumstoffs.

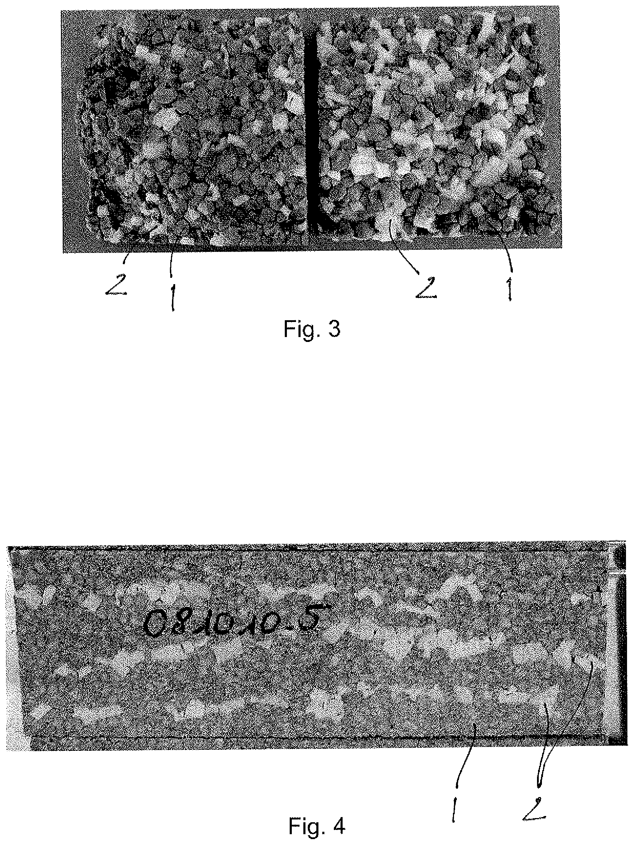

Eine Bruchkante des Verbundschaumstoffs der Fig. 2 zeigt das linke Bild der Fig. 3. Bei dem Verbundschaumstoff, dessen Bruchkante auf dem rechten Bild der Fig. 3 zu erkennen ist, wurde der Anteil des Leichtfüllstoffs 2 auf 40 Gew.-% erhöht. Dennoch weist der Verbundschaumstoff einen stabilen Verbund auf.

Bild 4 zeigt die Schnittkante einer Wärmedämmplatte, welche aus einem erfindungsgemäßen Verbundschaumstoff hergestellt wurde. Die Zusammensetzung entspricht der des Verbundschaumstoffs der Fig. 1, jedoch wurde der Leichtfüllstoff 2 bestehend aus Phenolharzstücken diesmal nicht unregelmäßig sondern regelmäßig in Schichten angeordnet. Insgesamt weist die Platte drei Schichten auf, welche Phenolharzstücke als Leichtfüllstoff 2 enthalten.

Es ist ersichtlich, dass die Erfindung nicht auf die beschriebenen und dargestellten Ausführungsbeispiele begrenzt ist. Es sind vielmehr beliebige Kombinationen aus einem Schaumstoff 1 als Matrixmaterial und wenigstens einem hierin eingebetteten Leichtfüllstoff 2 möglich, die hier nicht abschließend aufgezählt werden können.

## Patentansprüche

1. Verbundschaumstoff zur Herstellung von Wärmedämmelementen, umfassend einen Schaumstoff (1) aus einem thermoplastischen Kunststoff, insbesondere expandiertes Polystyrol, expandiertes Polyethylen und/oder expandiertes Polypropylen,
**dadurch gekennzeichnet, dass** der Verbundschaumstoff nach einem Verfahren nach einem der Ansprüche 8 bis 13 hergestellt worden ist und in den Schaumstoff (1) aus thermoplastischem Kunststoff ein Granulat oder Stücke wenigstens eines Leichtfüllstoffs (2), umfassend einen synthetischen Füllstoff, eingebunden ist bzw. sind.

2. Verbundschaumstoff nach Anspruch 1,
**dadurch gekennzeichnet, dass** der Leichtfüllstoff (2) einen duroplastischen Schaumstoff, wie beispielsweise Polyurethan, Polyisocyanurat, Phenolharzschaum oder Melaminharzschaum, als synthetischen Füllstoff umfasst.

3. Verbundschaumstoff nach Anspruch 1 oder 2,
**dadurch gekennzeichnet, dass** der Leichtfüllstoff (2) einen synthetischen Füllstoff und einen natürlichen Füllstoff, wie beispielsweise geblähter Obsidian, geblähte Perlite, Blähglas, Blähton, Schaumglas, Kork oder Cellulose, umfasst.

4. Verbundschaumstoff nach einem der vorhergehenden Ansprüche,
**dadurch gekennzeichnet, dass** der Leichtfüllstoff (2) eine Rohdichte besitzt, die kleiner 150 kg/m³, vorzugsweise kleiner 100 kg/m³ ist, weiterhin vorzugsweise im Bereich von 10 kg/m³ bis 40 kg/m³ liegt.

5. Verbundschaumstoff nach einem der vorhergehenden Ansprüche,
**dadurch gekennzeichnet, dass** der Leichtfüllstoff (2) eine Wärmeleitfähigkeit besitzt, die kleiner 0,10 W/mK ist, vorzugsweise im Bereich von 0,01 bis 0,07 W/mK, weiterhin vorzugsweise im Bereich von 0,01 bis 0,03 W/mK liegt.

6. Verbundschaumstoff nach einem der vorhergehenden Ansprüche,
**dadurch gekennzeichnet, dass** der Leichtfüllstoff (2) unregelmäßig oder regelmäßig im Verbundschaumstoff angeordnet ist.

7. Wärmedämmelement, insbesondere Wärmedämmplatte zur Wärmedämmung von Gebäuden, aus einem Verbundschaumstoff nach einem der vorhergehenden Ansprüche.

8. Verfahren zur Herstellung eines Verbundschaumstoffs nach einem der vorhergehenden Ansprüche,
**dadurch gekennzeichnet, dass** als Matrixmaterial ein schäumbarer thermoplastischer Kunststoff, insbesondere expandierbares Polystyrol, expandierbares Polyethylen und/oder expandierbares Polypropylen, verwendet wird, welcher nach Zugabe wenigstens eines als Granulat vorliegenden oder zuvor in Stücke zerteilten Leichtfüllstoffs (2), umfassend einen synthetischen Füllstoff, aufgeschäumt wird, wobei der Anteil des Leichtfüllstoffs 5 bis 80 Gew.-%, vorzugsweise 10 bis 60 Gew.-%, weiterhin vorzugsweise 20 bis 40 Gew.-%, bezogen auf das Gesamtgewicht der Ausgangsstoffe bestehend aus thermoplastischem Kunststoff und wenigstens einem Leichtfüllstoff beträgt.

9. Verfahren nach Anspruch 8,
**dadurch gekennzeichnet, dass** der thermoplastische Kunststoff in einer Form oder kontinuierlich in einer Bandschäumanlage aufgeschäumt wird und der als Granulat vorliegende oder zuvor in Stücke zerteilte Leichtfüllstoff dem thermoplastischen Kunststoff vor oder während des Einbringens in die Form bzw. Bandschäumanlage zugegeben wird.

10. Verfahren nach Anspruch 8 oder 9,
**dadurch gekennzeichnet, dass** als Leichtfüllstoff ein duroplastischer Schaumstoff, wie beispielsweise Polyurethan, Polyisocyanurat, Phenolharzschaum oder Melaminharzschaum, verwendet wird.

11. Verfahren nach einem der Ansprüche 8 bis 10,
**dadurch gekennzeichnet, dass** als Leichtfüllstoff ein synthetischer Füllstoff und ein natürlicher Füllstoff, wie beispielsweise geblähter Obsidian, geblähte Perlite, Blähglas, Blähton, Schaumglas, Kork oder Cellulose, verwendet wird.

12. Verfahren nach einem der Ansprüche 8 bis 11,
**dadurch gekennzeichnet, dass** als Leichtfüllstoff ein Recyclingmaterial verwendet wird.

13. Verfahren nach einem der Ansprüche 8 bis 12,
**dadurch gekennzeichnet, dass** als Leichtfüllstoff ein duroplastischer Schaumstoff verwendet wird, der vor der Zugabe zum thermoplastischen Kunststoff in Stücke zerteilt wird, wobei die Stücke eine maximale Kantenlänge aufweisen, die vorzugsweise 2mm bis 10mm, weiterhin vorzugsweise 4mm bis 8mm beträgt.

## Claims

1. Composite foam for the production of heat insulation elements, comprising a foam (1) made from a thermoplastic material, in particular expanded polystyrene, expanded polyethylene and/or expanded polypropylene,
**characterised in that** the composite foam has been produced in a process according to any of claims 8 to 13, and a granulate or pieces of at least one light-weight filler (2) is/are incorporated in the foam (1) made from thermoplastic material.

2. Composite foam according to claim 1,
**characterised in that** the light-weight filler (2) comprises a thermosetting foam such as polyurethane, polyisocyanurate, phenolic foam or melamine resin foam as a synthetic filler.

3. Composite foam according to claim 1 or 2,
**characterised in that** the light-weight filler (2) comprises a synthetic filler and a natural filler, such as expanded obsidian, expanded perlite, expanded glass, expanded clay, foam glass, cork or cellulose.

4. Composite foam according to any of the preceding claims,
**characterised in that** the lightweight filler (2) has a bulk density less than 150 kg/m³, preferably less than 100 kg/m³, more preferably in the range from 10 kg/m³ to 40 kg/m³.

5. Composite foam according to any of the preceding claims,
**characterised in that** the lightweight filler (2) has a thermal conductivity less than 0.10 W/mK, preferably in the range from 0.01 to 0.07 W/mK, more preferably in the range from 0.01 to 0.03 W/mK.

6. Composite foam according to any of the preceding claims,
**characterised in that** the light filler (2) is arranged irregularly or regularly in the composite foam.

7. Thermal insulation element, in particular a heat insulating panel for thermal insulation of buildings, made from a composite foam according to any of the preceding claims.

8. Method for manufacturing a composite foam according to any of the preceding claims,
**characterised in that** a foamable thermoplastic synthetic material, in particular expandable polystyrene, expandable polyethylene and/or expanded polypropylene is used as the matrix material, which is foamed after the addition of at least one lightweight filler (2) provided in the form of granules or previously fragmented pieces comprising a synthetic filler, wherein the lightweight filler constitutes from 5 to 80% by weight, preferably 10 to 60% by weight, more preferably 20 to 40% by weight, relative to the total weight of the starting materials consisting of a thermoplastic material and at least one lightweight filler.

9. Method according to claim 8,
**characterised in that** the thermoplastic material is foamed in a mould or continuously in a conveyor foaming unit, and the lightweight filler present as granulate or previously fragmented pieces is added to the thermoplastic material before or while the material is placed in the mould or conveyor foaming unit.

10. Method according to claim 8 or 9,
**characterised in that** a thermosetting foam such as polyurethane, polyisocyanurate, phenolic foam or melamine resin foam is used as the lightweight filler.

11. Method according to any of claims 8 to 10,
**characterised in that** a synthetic filler and a natural filler, such as expanded obsidian, expanded perlite, expanded glass, expanded clay, foam glass, cork or cellulose are used as the lightweight filler.

12. Method according to any of claims 8 to 11,
**characterised in that** a recycled material is used as the lightweight filler.

13. Method according to any of claims 8 to 12,
**characterised in that** a thermosetting foam, which is broken into pieces before being added to the thermoplastic material is used as the lightweight filler, wherein the pieces have a maximum edge length that is preferably from 2 mm to 10 mm, more preferably 4 mm to 8 mm.

## Revendications

1. Mousse composite destinée à fabriquer des éléments de calorifugeage, comprenant une mousse (1) en une matière thermoplastique, notamment en polystyrène expansé, en polyéthylène expansé et/ou en polypropylène expansé,
**caractérisée en ce que** la mousse composite a été fabriquée d'après un procédé selon l'une quelconque des revendications 8 à 13 et **en ce que** dans la mousse (1) en matière thermoplastique est ou sont incorporé(s) un granulé ou des morceaux d'au moins une matière de charge légère (2), comprenant une matière de charge synthétique.

2. Mousse composite selon la revendication 1,
**caractérisée en ce que** la matière de charge légère (2) comprend en tant que matière de charge synthétique une mousse duroplastique, comme par exemple du polyuréthane, du poly-isocyanurate, de la mousse de résine phénolique ou de la mousse de résine de mélamine.

3. Mousse composite selon la revendication 1 ou la revendication 2,
**caractérisée en ce que** la matière de charge légère (2) comprend une matière de charge synthétique et une matière de charge naturelle, comme par exemple de l'obsidienne expansée, de la perlite expansée, du verre expansé, de l'argile expansée, du verre cellulaire, du liège ou de la cellulose.

4. Mousse composite selon l'une quelconque des revendications précédentes,
**caractérisée en ce que** la matière de charge légère (2) présente une masse volumique apparente qui est inférieure à 150 kg/m³, de préférence inférieure à 100 kg/m³, de manière encore plus préférée qui se situe dans l'ordre de 10 kg/m³ à 40 km/m³.

5. Mousse composite selon l'une quelconque des revendications précédentes,
**caractérisée en ce que** la matière de charge légère (2) présente une conductibilité thermique qui est inférieure à 0,10 W/mK, qui se situe de préférence dans l'ordre de 0,01 à 0,07 W/mK, de manière encore plus préférée, dans l'ordre de 0,01 à 0,03 W/mK.

6. Mousse composite selon l'une quelconque des revendications précédentes,
**caractérisée en ce que** la matière de charge légère (2) est placée irrégulièrement ou régulièrement dans la mousse composite.

7. Élément de calorifugeage, notamment panneau d'isolation thermique pour assurer l'isolation thermique de bâtiments, en une mousse composite selon l'une quelconque des revendications précédentes.

8. Procédé destiné à fabriquer une mousse composite selon l'une quelconque des revendications précédentes,
**caractérisé en ce qu'**en tant que matière matricielle, on utilise une matière thermoplastique expansible, notamment du polystyrène expansible, du polyéthylène expansible et/ou du polypropylène expansible que l'ont fait mousser, après y avoir ajouté au moins une matière de charge légère (2) se présentant en granulés ou préalablement divisée en morceau, comprenant une matière de charge synthétique, la part en matière de charge légère étant de 5 à 80 % en poids, de préférence de 10 à 60 % en poids, de manière encore plus préférée de 20 à 40 % en poids, en rapport au poids total des matières de départ, constituées d'une matière thermoplastique et d'au moins une matière de charge légère.

9. Procédé selon la revendication 8,
**caractérisé en ce qu'**on fait mousser la matière thermoplastique dans un moule ou en continu dans une installation de moussage en continu à bande et on ajoute à la matière thermoplastique la matière de charge légère se présentant en granulés ou préalablement divisée en morceaux avant ou pendant l'introduction dans le moule ou dans l'installation de moussage à bande.

10. Procédé selon la revendication 8 ou la revendication 9,
**caractérisé en ce qu'**en tant que matière de charge légère, on utilise une mousse duroplastique, comme par exemple du polyuréthane, du poly-isocyanurate, de la mousse de résine phénolique ou de la mousse de résine de mélamine.

11. Procédé selon l'une quelconque des revendications 8 à 10,
**caractérisé en ce qu'**en tant que matière de charge légère, on utilise une matière de charge synthétique et une matière de charge naturelle, comme par exemple de l'obsidienne expansée, de la perlite expansée, du verre expansé, de l'argile expansée, du verre cellulaire, du liège ou de la cellulose.

12. Procédé selon l'une quelconque des revendications 8 à 11,
**caractérisé en ce qu'**en tant que matière de charge légère, on utilise une matière recyclée.

13. Procédé selon l'une quelconque des revendications 8 à 12,
**caractérisé en ce qu'**en tant que matière de charge légère, on utilise une mousse duroplastique qu'on divise en morceaux avant l'ajout à la matière thermoplastique, les morceaux ayant une longueur maximale de bord qui est de préférence de 2 mm à 10 mm, de manière encore plus préférée de 4 mm à 8 mm.
